# EUROPEAN PATENT APPLICATION

(11) **EP 4 848 895 A1**
(43) Date of publication of application: **02.12.2026**
(21) Application number: 24919666.8
(22) Date of filing: 24.07.2024
(51) Int. Cl.: H05B 3/20, H05B 3/26, G03G 15/20

(54) **THIN-FILM HEATING ELEMENT AND PREPARATION METHOD THEREFOR, AND ELECTRIC HEATING DEVICE AND ELECTRIC VEHICLE**

(30) Priority: 26.01.2024 CN 202410113249
(71) Applicant: Zhenjiang Helmholtz Heat Transfer Trans System Co., Ltd., Zhenjiang, Jiangsu 212002 (CN)
(72) Inventor: LIU, Bo, Zhenjiang, Jiangsu 212002 (CN); ZHOU, Jiandang, Zhenjiang, Jiangsu 212002 (CN); CHEN, Zedong, Zhenjiang, Jiangsu 212002 (CN); XU, Jian, Zhenjiang, Jiangsu 212002 (CN); WANG, Huifang, Zhenjiang, Jiangsu 212002 (CN); LUO, Jingshuai, Zhenjiang, Jiangsu 212002 (CN); REN, Yingmu, Zhenjiang, Jiangsu 212002 (CN); WEI, Xianyu, Zhenjiang, Jiangsu 212002 (CN); CHANG, Tao, Zhenjiang, Jiangsu 212002 (CN); JIANG, Yi, Zhenjiang, Jiangsu 212002 (CN)
(74) Representative: SSM Sandmair
(86) International application number: PCT/CN2024/107167
(87) International publication number: WO 2025/156582

(57) **Abstract**

A thin-film heating element and a preparation method therefor, an electric heating device and an electric vehicle. The thin-film heating element comprises a resistive layer (10), the resistive layer (10) comprises a main body portion for forming resistance patterns, and the main body portion comprises deflection sections (11) and straight sections (12) that are electrically contiguous to the deflection sections (11) and are parallel to each other, wherein the sheet resistance of the deflection sections (11) is less than the sheet resistance of the straight sections (12). Reducing the sheet resistance of deflection sections can improve the localized heat accumulation at the deflection sections, and achieves the effect of mitigating current crowding.

## Description

### TECHNICAL FIELD

The present application relates to the field of electric heating devices, and more particularly, to a thin-film heating element and a preparation method therefor, an electric heating device and an electric vehicle.

### BACKGROUND

Currently, thin-film heating elements mostly employ materials such as nickel-chromium alloy and utilize thermal spraying processes to prepare the heating layer. These elements exhibit good stability, and the material properties ensure that the resistance value of the nickel-chromium alloy does not change due to variations in operating temperature. Therefore, they can maintain a constant resistance value over a wide temperature range.

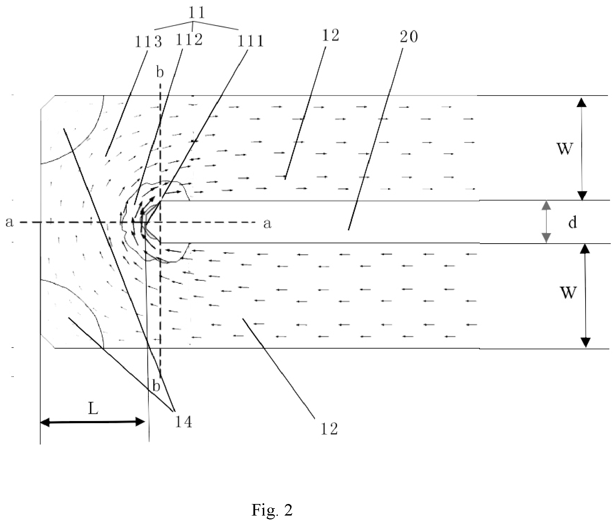

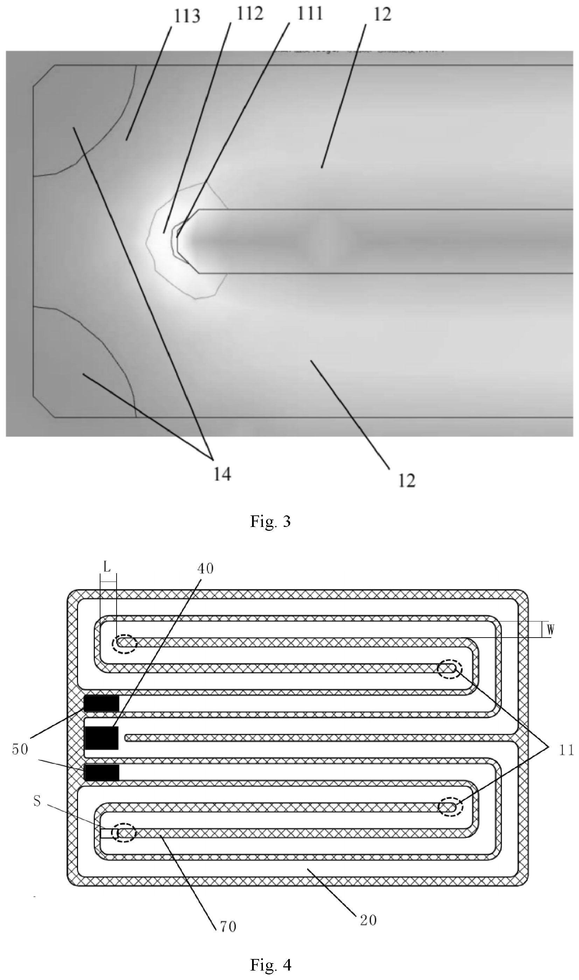

To ensure that the thin-film heating element has a large heating area and improves heating efficiency, it is necessary to maximize its occupation of the heating region. During the design process, the resistive layer (i.e., the heating layer) of the thin-film heating element is often arranged in a serpentine pattern. This arrangement inevitably includes deflection sections 11 (i.e., the curved regions in the resistive layer pattern, where the two sides of the deflection section 11 are straight sections 12, and the boundary between them is defined by the arc starting position of deflection, as indicated by the b-b plane in FIG. 2). When current flows through the resistive layer, it tends to seek the path of lowest resistance (or the shortest path). Specifically, the current density in the deflection section 11 gradually decreases outward from the deflection center. For example, as shown in FIG. 2, the deflection section 11 can be divided into a first region 111, a second region 112, and a third region 113 moving outward from the deflection center, with the current density gradually decreasing from the first region 111 to the third region 113. That is, the current density in the first region 111 is 100%, approximately 60% in the second region 112, and about 20% in the third region 113. In the corner regions 14 of the main body portion, the current density is below 20%. This phenomenon leads to a non-uniform distribution of current in the deflection section. Such an uneven current distribution results in current crowding and heat accumulation in the deflection section. Specifically, current crowding and heat accumulation primarily occur in regions where the current density is 60% or above, which can be referred to as hotspot regions. The temperature in these hotspot regions is higher than that in other regions, eventually resulting in hot spots in the deflection sections, as indicated by the bright area in FIG. 3, which may eventually lead to localized damage to the thin-film heating element.

Therefore, resolving the problem of heat imbalance caused by non-uniform current density in the deflection sections of thin-film heating elements constitutes a technical problem that needs to be addressed in this application.

### SUMMARY

In view of this, the present application proposes a thin-film heating element to improve the heat accumulation of the deflection section.

The present application provides a thin-film heating element, wherein the thin-film heating element comprises a resistive layer, the resistive layer comprises a main body portion for forming resistance patterns, and the main body portion comprises deflection sections and straight sections that are electrically contiguous to the deflection sections and are parallel to each other, wherein the sheet resistance of the deflection sections is less than the sheet resistance of the straight sections. Optionally, the distance between the straight sections is 1.5 mm-3 mm, and the width of the deflection section is greater than the width of the straight section.

Optionally, the thin-film heating element comprises an insulating layer arranged on a lower side of the resistive layer.

Optionally, the resistive layer comprises an overlapped bridge arranged on the deflection section, the overlapped bridge being connected at both ends to the adjacent straight sections of the deflection section, respectively, and the electrical conductivity of the material of the overlapped bridge is greater than that of the material of the main body portion.

Optionally, the overlapped bridge is arranged close to the deflection center of the deflection section, such that an inner side edge of the deflection section is located between two side edges of the overlapped bridge, and an outer side edge of the overlapped bridge is located at a distance of 1-2 mm from an outer side edge of the deflection section.

Optionally, the cross-section of the overlapped bridge is provided with a step, such that a bottom of the overlapped bridge is joined to the main body portion and the insulating layer, respectively, through the step.

Optionally, a covering layer is arranged on the resistive layer.

Optionally, the covering layer and the insulating layer are of the same material and are able to form an integrated structure by thermal spraying of the covering layer; and/or the covering layer is provided with an opening for the provision of an electrical connection component.

Optionally, the thin-film heating element comprises a buffer layer arranged under the insulating layer and a substrate arranged under the buffer layer, the buffer layer being formed of a metal material whose coefficient of thermal expansion is between that of the substrate and that of the insulating layer.

Optionally, the insulating layer is formed of aluminum oxide or zirconium oxide; and/or the main body portion is formed of a nickel-chromium alloy material or an iron-chromium-aluminum material.

Optionally, the resistive layer comprises two resistance patterns arranged side by side, with each resistance pattern being provided with the deflection section and the straight section.

Optionally, the thin-film heating element comprises a positive electrical connection component and a negative electrical connection component for the two resistance patterns, respectively; and/or, the two resistance patterns are symmetrically arranged.

The present application also provides an electric heating device, wherein the electric heating device comprises the thin-film heating element of the present application.

The present application also provides an electric vehicle, wherein the electric vehicle comprises the electric heating device of the present application.

The present application also provides a preparation method for a thin-film heating element, wherein, the thin-film heating element is the thin-film heating element of the present application, the distance between the straight sections is 2mm-3 mm, the preparation method comprising: S1. arranging a masking tape, so that the masking tape forms a masking pattern complementary to the pattern of the main body portion; and S2. forming the main body portion by thermal spraying.

The present application also provides a preparation method for a thin-film heating element, wherein the thin-film heating element is the thin-film heating element of the present application, the distance between the straight sections is 0.5 mm-3 mm, the preparation method comprising: S1'. forming a layered structure through thermal spraying of a resistive material; and S2'. removing part of the layered structure by laser to form the main body portion.

Optionally, the preparation method comprises: S3. forming an overlapped bridge through thermal spraying of a material having an electrical conductivity greater than that of the main body portion, so that two ends of the overlapped bridge are respectively connected to adjacent straight sections of the deflection section; and/or, S4. after forming the resistive layer, forming a covering layer through thermal spraying of the same material as the insulating layer, so that the insulating layer and the covering layer form an integrated structure.

According to the technical solution of the present application, by reducing the sheet resistance at the deflection sections, local heat accumulation in these sections can be mitigated, and the problem of current crowding can also be addressed.

Other features and advantages of the present application will be described in detail in the Detailed Description section that follows.

### BRIEF DESCRIPTION OF THE DRAWINGS

The accompanying drawings, which form a part of this application, are included to provide a further understanding of the application, and schematic embodiments of the application and their description serve to explain the application. In the drawings:
FIG. 1 is a temperature simulation diagram of an electric heater equipped with a thin-film heating element according to the prior art;
FIG. 2 is a schematic diagram illustrating the current density distribution at the deflection section of the thin-film heating element in FIG. 1;
FIG. 3 is a temperature simulation diagram corresponding to FIG. 2;
FIG. 4 is a schematic diagram showing the thermal spraying of the resistance pattern of the thin-film heating element according to one embodiment of this application;
FIGS. 5 to 6 depict the preparation process of the thin-film heating element in Example 1;
FIG. 7 is a schematic diagram showing the thermal spraying of an overlapped bridge for the thin-film heating element according to one embodiment of this application;
FIG. 8 is a cross-sectional view along the B-B plane in FIG. 7;
FIG. 9 is a cross-sectional view along the C-C plane in FIG. 7;
FIG. 10 is an infrared temperature field diagram of the electric heater equipped with the thin-film heating element in Example 2.

### DETAILED DESCRIPTION

The technical solutions of the present application will be explained in detail below with reference to the accompanying drawings and in combination with the embodiments.

According to one aspect of the present application, a thin-film heating element is provided, wherein the thin-film heating element comprises a resistive layer 10, the resistive layer 10 comprises a main body portion for forming resistance patterns, and the main body portion comprises deflection sections 11 and straight sections 12 that are electrically contiguous to the deflection sections 11 and are parallel to each other, wherein the sheet resistance of the deflection sections 11 is less than the sheet resistance of the straight sections 12.

Wherein, the sheet resistance is a parameter used to describe the resistive properties of thin-film resistors or thin-layer resistive materials. Specifically, it refers to the resistance encountered when current flows perpendicular to the surface of a thin sheet material. In this application, the deflection sections 11 and the straight sections 12 are continuously arranged and each possesses a cross-section perpendicular to their continuous extension direction. The sheet resistance of the deflection section 11 is defined as the resistance when the current flows perpendicular to its cross-section. For instance, in FIG. 2, the a-a cross-section represents the location where the deflection section 11 has the smallest width and thus the highest sheet resistance. Similarly, the sheet resistance of the straight section 12 is defined as the resistance when the current flows perpendicular to its cross-section (i.e., the b-b cross-section shown in FIG. 2).

According to another aspect of the present application, there is provided an electric heating device, wherein the electric heating device comprises the thin-film heating element of the present application.

According to another aspect of the present application, an electric vehicle is provided, wherein the electric vehicle comprises the electric heating device of the present application.

By reducing the sheet resistance at the deflection sections, local heat accumulation in these sections can be mitigated, and the problem of current crowding can also be addressed.

This application can employ appropriate methods to make the sheet resistance of the deflection section 11 smaller than that of the straight section 12.

The distance between the straight sections 12 adjacent to both sides of the deflection section 11 (i.e., the dimension d of the spacing defined by the insulating material of the insulating layer 20 in FIG. 2) has a significant impact on the heat accumulation at the deflection section 11.

According to one embodiment of this application, when the distance between the straight sections 12 is 1.5 mm-3 mm, the width of the deflection section 11 can be made greater than that of the straight section 12.

By increasing the width of the deflection section 11, its total area and thermal capacitance are enhanced, thereby improving the local heat accumulation at the deflection section 11 through the heat transfer characteristics of the metal resistance material and also improving the current crowding. For instance, when the width of the deflection section 11 is 1.5 times that of the straight section 12, its thermal capacitance increases to 1.5 times, making the heat conduction capacity of the deflection portion 11 much higher than that of the adjacent insulating area, thus enhancing the temperature equalization capability of the deflection section 11.

Meanwhile, the area of the hotspot region (where the current density exceeds 60% or above) expands by approximately 20%. With the heating power of the resistive strip remaining constant, this results in a reduction in the temperature of the hotspot region.

To appropriately increase the total area and thermal capacitance of the deflection section 11, the widening dimension of the deflection section 11 can be reasonably set. Preferably, the width of the deflection section 11 is set to be 120% to 150% of that of the straight section 12, so as to better balance the heat between the straight section 12 and the deflection section 11 and reduce the temperature difference therebetween.

According to another embodiment of the present application, when the turning radius of the deflection section 11 is smaller, i.e., the spacing between the straight sections 12 is further reduced, e.g., the spacing is 1.5 mm or less (e.g., 0.4 mm-1.5 mm), particularly 1 mm or less, the current crowding is more pronounced, and the bridge 13 can be overlapped to reduce the sheet resistance of the deflection section 11 and improve the heat crowding. Of course, in the case where the spacing d is larger, the heat crowding can be improved by means of overlapping the bridge 13.

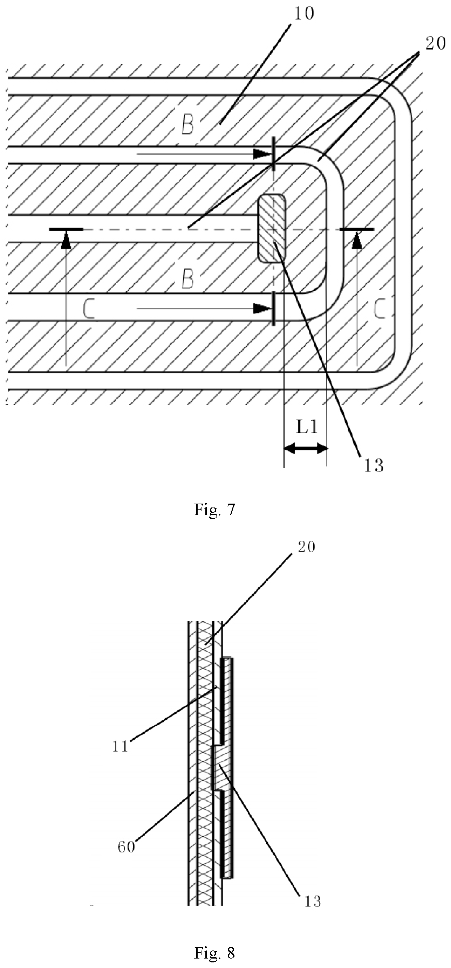

Specifically, as shown in FIGS. 7 to 9, the resistive layer 10 may include an overlapped bridge 13 arranged on the deflection section 11. Both ends of the overlapped bridge 13 are connected to the adjacent straight sections 12 of the deflection section 11, respectively. The electrical conductivity of the material of the overlapped bridge 13 is greater than that of the material of the main body portion. In use, at the deflection section 11, most of the current flows through the overlapped bridge 13, which is equivalent to reducing the sheet resistance at the deflection section 11. As a result, almost no current passes through the deflection section 11, preventing excessive heat generation and thus avoiding heat accumulation.

Preferably, as shown in FIG. 7, the overlapped bridge 13 is arranged close to the deflection center of the deflection section 11, such that an inner side edge of the deflection section 11 is located between two side edges of the overlapped bridge 13, and an outer side edge (the right side edge of the overlapped bridge 13 in FIG. 7) of the overlapped bridge 13 is located at a distance L1 of 1mm-2 mm from an outer side edge of the deflection section 11.

In addition, in the thin-film heating element of the present application, the thin-film heating element includes an insulating layer 20 arranged on the lower side of the resistive layer 10. To facilitate the arrangement of the overlapped bridge 13, the cross-section of the overlapped bridge 13 is provided with a step, such that a bottom of the overlapped bridge 13 is joined to the main body portion and the insulating layer 20, respectively, through the step. Consequently, the overlapping bridge 13 can be securely positioned, which is also advantageous for the fabrication of the thin-film heating element.

In the present application, the insulating layer 20 can be fabricated from suitable materials that provide insulation while being compatible with the operating environment of the thin-film heating element. Preferably, the insulating layer 20 is formed of aluminum oxide or zirconium oxide. The resistive layer 10 can be made of appropriate conductive materials, wherein the main body portion can be formed of a nickel-chromium alloy material or an iron-chromium-aluminum material, and the overlapping bridge 13 can be formed of highly conductive materials such as silver, copper, or aluminum.

In addition, a covering layer 30 is arranged on the resistive layer 10. The covering layer 30 is configured to protect the thin-film heating element and provides insulation between the thin-film heating element and the external environment. Preferably, the covering layer 30 and the insulating layer 20 are of the same material and are able to form an integrated structure by thermal spraying of the covering layer 30. This approach facilitates, on one hand, the arrangement of the covering layer 30, and on the other hand, enables the easy formation of an integrated structure between the covering layer 30 and the insulating layer 20, thereby providing better constraint to the resistive layer 10 between the covering layer 30 and the insulating layer 20.

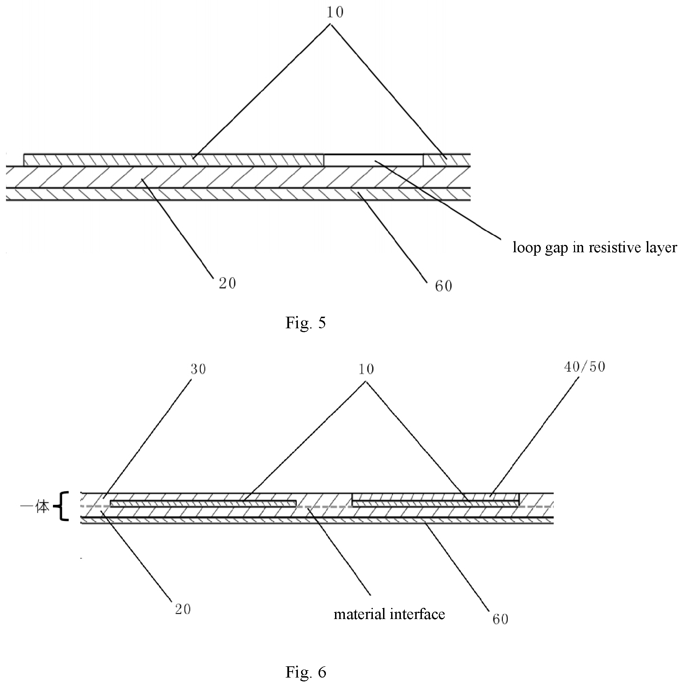

Additionally, as shown in FIGS. 5, 6, 8 and 9, the thin-film heating element may include a buffer layer 60 arranged under the insulating layer 20 and a substrate arranged under the buffer layer 60. The buffer layer 60 is formed of a metal material (e.g., the same material as the main body portion) whose coefficient of thermal expansion is between that of the substrate and that of the insulating layer 20, so as to buffer the temperature change between the substrate and the insulating layer 20.

In the present application, the resistance pattern of the resistive layer 10 can be set as needed, that is, the shape, position, and quantity of the resistance pattern can be set as required. Preferably, to make full use of the space in the area occupied by the resistive layer 10, the resistive layer 10 may include two resistance patterns arranged side by side, each of which is provided with the deflection section 11 and the straight section 12. For example, in the embodiment shown in FIG. 4, two resistance patterns may be continuous patterns in a meandering looped shape, with the deflection section 11 at each turning position of the surrounding.

In addition, the thin-film heating element comprises a positive electrical connection component 40 and a negative electrical connection component 50 for the two resistance patterns, respectively. To facilitate the arrangement of the electrical connection components, the covering layer 30 may be provided with an opening for the provision of the electrical connection component. The positions and quantities of the openings can be designed according to the resistance pattern of the resistive layer 10. To further improve the space utilization of the resistive layer 10 and reasonably arrange the openings and electrical connection components, the two resistance patterns may be symmetrically arranged.

Further, two positive electrical connection components 40 and two corresponding negative electrical connection components 50 may be provided for two resistance patterns, respectively. Preferably, to simplify the process and reduce openings, the two resistance patterns may share either the positive electrical connection component 40 or the negative electrical connection component 50. For example, in the embodiment shown in FIG. 4, the resistive layer 10 is provided with two symmetrical resistance patterns, the two resistance patterns are merged at the center of symmetry to form a parallel connection, the two resistance patterns are respectively provided with the negative electric connection components 50 and share one positive electric connection component 40 at the merging point, and the negative electric connection components 50 are arranged close to the positive electric connection component 40 on both sides thereof, for this purpose, the covering layer 30 may be provided with only three adjacent openings.

Wherein, each resistance pattern has a meandering looped shape, and when the two resistance patterns are symmetrically arranged, they can significantly enhance the heating power. Specifically, if each resistance pattern in the two patterns shown in FIG. 4 has a resistance of R, the total heating power is the sum of the powers of the two parallel resistance patterns, which is 2×U²/R (U is the voltage between the positive and negative electrical connection components). Assuming that only a single resistance pattern is arranged in the same area occupied by the two resistance patterns, the resistance of this single resistance pattern would be 2R, and its heating power would be U²/2R. It can thus be seen that using the resistance patterns shown in FIG. 4 increases the heating power to four times compared to the case where a single resistance pattern is used.

The thin-film heating element of the present application can be prepared by appropriate means. In particular, the present application also provides a preparation method for the thin-film heating element, wherein the thin-film heating element is the thin-film heating element of the present application, wherein:
when the distance between the straight sections 12 is 2mm-3 mm, the preparation method may comprise: S1. a masking tape 70 is arranged, so that the masking tape 70 forms a masking pattern complementary to the pattern of the main body portion; and S2. the main body portion is formed by thermal spraying;
when the distance between the straight sections 12 is 0.5 mm-3 mm, the preparation method may comprise: S1'. a layered structure is formed through thermal spraying of a resistive material; and S2'. part of the layered structure is removed by laser to form the main body portion.

That is to say, when the distance between the straight sections 12 is relatively large, a masking tape 70 can be applied to assist in forming the main body portion. It is understandable that when the distance between the straight sections 12 is 2mm-3mm, the main body portion can also be formed using S1' and S2'.

During the construction of the main body portion of the resistive layer 10, the masking tape 70 is applied to create a masking pattern. Specifically, the masking pattern covers the areas where the main body portion is not intended to be formed, thereby preventing the material of the main body portion from being deposited during subsequent thermal spraying at the masking patten. As a result, the material can only be deposited on the complementary shape to the masking pattern, forming the main body portion with the desired pattern. Wherein, pattern complementarity means that the masking pattern and the resistance pattern can fit together to form the spray plane for thermal spraying. Specifically, taking the embodiment shown in FIG. 4 as an example, the masking tape 70 is used to create a masking pattern with a meandering looped shape. Subsequently, two meandering resistance patterns (winding in opposite directions and symmetrically arranged about a central line) complementary to the masking pattern are formed through thermal spraying. These two resistance patterns are symmetrical and merge at the center of symmetry to form a continuous pattern, allowing them to be formed in a single thermal spraying process. Together, the two resistance patterns form four deflection sections 11, which are indicated by dashed lines in the figure.

Based on the structure of the thin-film heating element, the masking tape 70 can be placed at appropriate positions followed by thermal spraying. For instance, when a buffer layer 60 is provided, the preparation method comprises the following steps: S0. the buffer layer 60 is formed on the substrate via thermal spraying, and then the insulating layer 20 is formed on the buffer layer 60 also via thermal spraying; in Step S1, the masking tape 70 is arranged on the insulating layer 20.

Wherein, the masking tape 70 is used to block the deposition of the molding material during thermal spraying. It is preferably a high-temperature-resistant masking tape, such as the high-temperature spray masking tape YC-628. After thermal spraying to form the main body portion, the masking tape 70 can be removed to facilitate subsequent processing. Specifically, when an overlapped bridge 13 is arranged, the preparation method includes the following steps: S3. after the masking tape 70 is removed, an overlapped bridge 13 is formed through thermal spraying of a material having an electrical conductivity greater than that of the main body portion, so that two ends of the overlapped bridge 13 are respectively connected to adjacent straight sections 12 of the deflection section 11; and S4. after the resistive layer 10 is formed, a covering layer 30 is formed through thermal spraying of the same material as the insulating layer 20, so that the insulating layer 20 and the covering layer 30 form an integrated structure. When no overlapped bridge 13 is arranged, only Step S4 may be performed.

Wherein, when the overlapped bridge 13 is formed, the areas outside the region where the overlapped bridge 13 needs to be arranged can be masked again with the masking tape 70, so that the molding can be carried out only at the overlapped bridge 13.

Examples of the preparation method and the thin-film heating element of the present application are explained below with reference to the drawings.

### Example 1

Wherein, the main body portion comprises two symmetrically arranged resistance patterns, each resistance pattern is in the meandering looped shape as shown in FIG. 4, the distance between adjacent straight sections 12 is 2.5 mm, the sheet resistance is reduced by widening the width of the deflection section 11, the width at the a-a section is 150% of the width of the straight section 12.

In preparation, firstly, nickel-chromium alloy (Ni80Cr20) is thermally sprayed onto the substrate (aluminum) to form the buffer layer 60. Subsequently, aluminum oxide is thermally sprayed on the buffer layer 60 to form the insulating layer 20. Then, the masking tape 70 is arranged on the insulating layer 20 to create a masking pattern. After that, nickel-chromium alloy (Ni80Cr20) is thermally sprayed again to form the main body portion of the desired resistance patterns, as shown in FIG. 5. After removing the masking tape 70, the covering layer 30 with openings is formed by thermally spraying aluminum oxide, so that the covering layer 30 forms an integrated structure with the insulating layer 20. Finally, electrical connection components are formed by thermal spraying at the openings, as shown in FIG. 6.

### Example 2

Wherein, the main body portion comprises two resistance patterns arranged symmetrically, each resistance pattern is in a meandering looped shape, the distance between adjacent straight sections 12 is 0.8 mm, the sheet resistance is reduced by arranging an overlapped bridge 13, the width of the overlapped bridge 13 is 1-3 mm, and the distance L1 of the outer side edge from the outer side edge of the deflection section 11 is 1-3 mm.

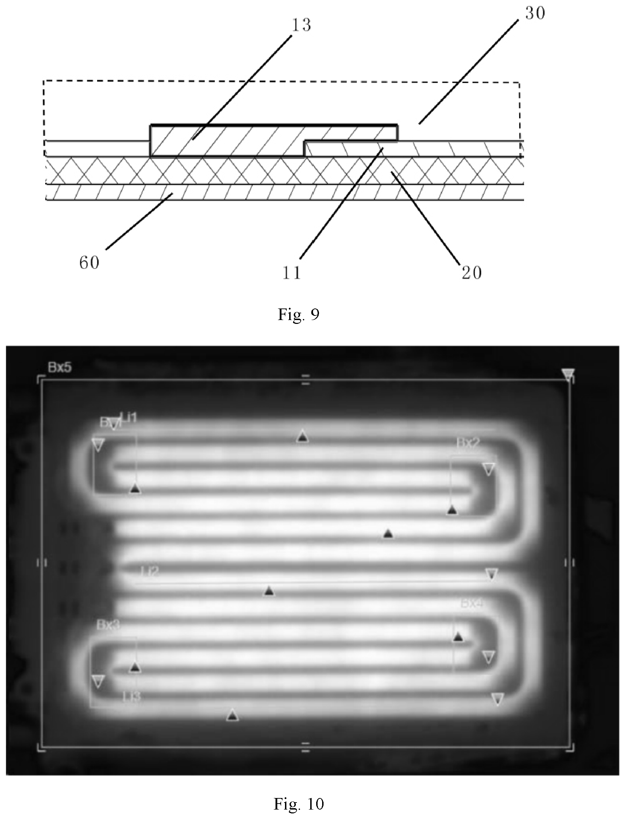

In preparation, firstly, iron-chromium-aluminum (0Cr25AL5) is thermally sprayed onto the substrate (aluminum alloy) to form the buffer layer 60. Subsequently, aluminum oxide is thermally sprayed on the buffer layer 60 to form the insulating layer 20. Then, the iron-chromium-aluminum (0Cr25AL5) is thermally sprayed onto the insulating layer 20 to create a layered structure. After that, part of the resistive material is removed by laser to form the main body portion of the desired resistance patterns. The masking tape 70 is arranged near the deflection sections 11, and copper is thermally sprayed to form the overlapped bridge 13, as shown in FIG. 8. Subsequently, the masking tape 70 is removed, and the covering layer 30 with openings is formed by thermally spraying aluminum oxide, so that the covering layer 30 forms an integrated structure with the insulating layer 20, as shown in FIG. 9, and finally, electrical connection components are formed by thermal spraying at the openings.

### Comparative example

A thin-film heating element is prepared using the method of Example 1, wherein the width of the deflection section 11 is the same as that of the straight section 12.

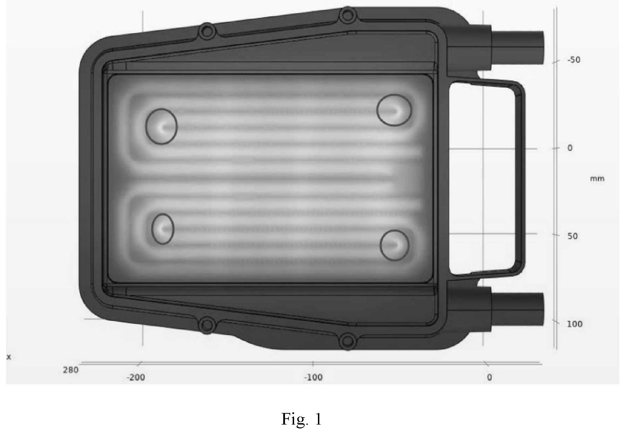

The thin-film heating elements from Example 1 and the Comparative example are applied to electric heating devices of the same specifications (the electric heating device comprises a heating chamber assembly defined by a cavity cover plate and a cavity bottom plate, as well as an upper cover and a lower cover respectively arranged on the upper and lower sides of the heating chamber assembly; the thin-film heating element is positioned between the heating chamber assembly and the lower cover; the heating chamber assembly is provided with an inlet, an outlet, and a flow channel connecting the inlet and the outlet). The comparison of operating parameters is shown in Table 1 below. Wherein, the highest point of the deflection section is located in the parts corresponding to the first region 111 and the second region 112 in FIG. 1.

**Table 1**

| Parameters/Items | Comparative example | Example 1 |
|---|---|---|
| Ambient temperature (°C) | 23 | 23 |
| Ambient humidity | 70% | 70% |
| Heater power (KW) | 8000 | 8000 |
| Heater resistance (Ω) | 29.7 | 30.5 |
| Cooling liquid flow rate (L/h) | 600 | 600 |
| Inlet temperature (°C) | 60 | 60 |
| Measured temperature at highest point of deflection section (°C) | 160-180 | 120-140 |

It can thus be seen that under the same operating conditions, the maximum temperature of the deflection section in Example 1 is only 120°C - 140°C, which is 20°C lower than that in Comparative example, indicating a significant reduction in local heat accumulation.

FIG. 10 is an infrared temperature field diagram of the thin-film heating element used in an electric heating device in Example 2, while FIG. 1 is a temperature field simulation diagram obtained through multi-physics field coupling simulation for a thin-film heating element of the same specifications in the comparative example. As can be observed from the figures, the deflection section in the comparative example exhibits a distinct bright area (see the circled part in the figure), showing a significant temperature difference from the straight section and indicating obvious local heat accumulation. In contrast, the deflection section in Example 2 appears as a dark area (see the positions marked B×1 to B×4 in the figure), with a temperature lower than the surrounding areas, demonstrating a notable decrease in local heat accumulation.

Preferred embodiments of the present application are described in detail above, however, the present application is not limited to the specific details in the above embodiments, and many simple variations can be made to the technical solutions of the present application within the scope of the technical idea of the present application, which all belong to the protection scope of the present application.

It should be further noted that the various specific features described in the above detailed description can be combined in any suitable manner without contradiction, and in order to avoid unnecessary duplication, the various possible combinations are not further described herein.

In addition, any combination of the various embodiments of the present application can be made without departing from the spirit of the present application and should be considered as disclosed herein.

## Claims

1. A thin-film heating element, **characterized in that** the thin-film heating element comprises a resistive layer (10), the resistive layer (10) comprises a main body portion for forming resistance patterns, and the main body portion comprises deflection sections (11) and straight sections (12) that are electrically contiguous to the deflection sections (11) and are parallel to each other, wherein the sheet resistance of the deflection sections (11) is less than the sheet resistance of the straight sections (12).

2. The thin-film heating element according to claim 1, **characterized in that** the distance between the straight sections (12) is 1.5 mm-3 mm, and the width of the deflection section (11) is greater than the width of the straight section (12).

3. The thin-film heating element according to claim 1, **characterized in that** the thin-film heating element comprises an insulating layer (20) arranged on a lower side of the resistive layer (10).

4. The thin-film heating element according to claim 3, **characterized in that** the resistive layer (10) comprises an overlapped bridge (13) arranged on the deflection section (11), the overlapped bridge (13) being connected at both ends to the adjacent straight sections (12) of the deflection section (11), respectively, and the electrical conductivity of the material of the overlapped bridge (13) is greater than that of the material of the main body portion.

5. The thin-film heating element according to claim 4, **characterized in that** the overlapped bridge (13) is arranged close to the deflection center of the deflection section (11), such that an inner side edge of the deflection section (11) is located between two side edges of the overlapped bridge (13), and an outer side edge of the overlapped bridge (13) is located at a distance of 1-2 mm from an outer side edge of the deflection section (11).

6. The thin-film heating element according to claim 4, **characterized in that** the cross-section of the overlapped bridge (13) is provided with a step, such that a bottom of the overlapped bridge (13) is joined to the main body portion and the insulating layer (20), respectively, through the step.

7. The thin-film heating element according to claim 3, **characterized in that** a covering layer (30) is arranged on the resistive layer (10).

8. The thin-film heating element according to claim 7, **characterized in that** the covering layer (30) and the insulating layer (20) are of the same material and are able to form an integrated structure by thermal spraying of the covering layer (30); and/or the covering layer (30) is provided with an opening for the provision of an electrical connection component.

9. The thin-film heating element according to claim 3, **characterized in that** the thin-film heating element comprises a buffer layer (60) arranged under the insulating layer (20) and a substrate arranged under the buffer layer (60), the buffer layer (60) being formed of a metal material whose coefficient of thermal expansion is between that of the substrate and that of the insulating layer (20).

10. The thin-film heating element according to claim 3, **characterized in that** the insulating layer (20) is formed of aluminum oxide or zirconium oxide; and/or the main body portion is formed of a nickel-chromium alloy material or an iron-chromium-aluminum material.

11. The thin-film heating element according to any one of claims 1-10, **characterized in that** the resistive layer (10) comprises two resistance patterns arranged side by side, with each resistance pattern being provided with the deflection section (11) and the straight section (12).

12. The thin-film heating element according to claim 11, **characterized in that** the thin-film heating element comprises a positive electrical connection component (40) and a negative electrical connection component (50) for the two resistance patterns, respectively; and/or, the two resistance patterns are symmetrically arranged.

13. An electric heating device, **characterized by** comprising the thin-film heating element according to any one of claims 1-12.

14. An electric vehicle, **characterized by** comprising the electric heating device according to claim 13.

15. A preparation method for a thin-film heating element, **characterized in that** the thin-film heating element is the thin-film heating element according to claim 1, and the distance between the straight sections (12) is 2mm-3 mm, the preparation method comprising:
S1. arranging a masking tape (70), so that the masking tape (70) forms a masking pattern complementary to the pattern of the main body portion; and
S2. forming the main body portion by thermal spraying.

16. A preparation method for a thin-film heating element, **characterized in that** the thin-film heating element is the thin-film heating element according to claim 1, and the distance between the straight sections (12) is 0.5 mm-3 mm, the preparation method comprising:
S1'. forming a layered structure through thermal spraying of a resistive material; and
S2'. removing part of the layered structure by laser to form the main body portion.

17. The preparation method for the thin-film heating element according to claim 15 or 16, **characterized in that** the preparation method comprises:
S3. forming an overlapped bridge (13) through thermal spraying of a material having an electrical conductivity greater than that of the main body portion, so that two ends of the overlapped bridge (13) are respectively connected to adjacent straight sections (12) of the deflection section (11); and/or,
S4. after forming the resistive layer (10), forming a covering layer (30) through thermal spraying of the same material as the insulating layer (20), so that the insulating layer (20) and the covering layer (30) form an integrated structure.
